# EUROPÄISCHE PATENTSCHRIFT

(11) **EP 2 737 241 B1**
(45) Veröffentlichungstag und Bekanntmachung des Hinweises auf die Patenterteilung: **30.09.2015**
(21) Anmeldenummer: 12738446.9
(22) Anmeldetag: 20.07.2012
(51) Int. Cl.: F16L 55/11, F16L 57/00

(54) **VERSCHLUSSELEMENT FÜR ROHRENDEN**
CLOSURE ELEMENT FOR PIPE ENDS
ÉLÉMENT DE FERMETURE POUR EXTRÉMITÉS DE TUBES

(30) Priorität: 28.07.2011 DE 102011052227
(43) Veröffentlichungstag der Anmeldung: 04.06.2014
(73) Patentinhaber: Vallourec Deutschland GmbH, 40472 Düsseldorf (DE)
(72) Erfinder: SCHNEIDER, Gerald, 40885 Ratingen (DE); BECKMANN, Dieter, 45473 Mülheim a. d. Ruhr (DE); KETZER, Volker, 45219 Essen (DE)
(74) Vertreter: Moser Götze & Partner Patentanwälte mbB
(86) Internationale Anmeldenummer: PCT/EP2012/064316
(87) Internationale Veröffentlichungsnummer: WO 2013/014089

(56) Entgegenhaltungen:
- WO-A1-2011/065978
- US-A- 1 749 162
- US-A- 4 630 646
- US-A1- 2008 236 691

## Beschreibung

Die Erfindung betrifft ein Verschlusselement zum Verschließen eines Endes eines Rohres, insbesondere eines Stahlrohres, mit einem kreisförmigen Bodendeckel, mit dem in einem Montagezustand das Ende des Rohres verschließbar ist, an dem an einer dem Rohr zugewandten Seite mindestens zwei Klemmelemente angeordnet sind, die sich im Montagezustand an einer Innenoberfläche des Rohres abstützen und den Bodendeckel zum Verschließen des Endes des Rohres halten.

Derartige Verschlusselemente werden üblicherweise zum Schutz von Rohrenden verwendet, wenn Rohre transportiert werden und das Rohrinnere vor Schmutz oder Feuchtigkeit geschützt werden soll. Auch wenn die Rohre baustellenseitig verschweißt oder verschraubt werden, müssen die Rohrenden vor Beschädigungen beim Transport geschützt werden.

Als vorübergehender Rohrendenschutz haben sich bislang aufsteckbare Verschlusselemente durchgesetzt. Solche Verschlusselemente bestehen aus einem Bodendeckel und einem als Kragen ausgebildeten zylinderförmigen Außenmantel aus elastischem Kunststoff, wobei der Kragen den Außenumfang des Rohrendes umgreift und sich über elastische Rückfederung kraftschlüssig mit dem Rohr mehr oder weniger fest verklemmt.

Bei diesen Verschlusselementen besteht jedoch das Problem, dass sie sich durch den auf der Außenoberfläche aufliegenden Kragen während des Transportes beispielsweise durch Erschütterungen oder Relativbewegungen der Rohre zueinander häufig vom Rohrende lösen oder beschädigt werden und so die Schutzfunktion nicht mehr vorhanden ist. Zudem müssen sehr enge Toleranzen für den Innendurchmesser des Kragens eingehalten werden, damit einerseits der Kragen kraftschlüssig an der Rohroberfläche anliegt und andererseits ohne zu große Kraftanstrengung aufgesteckt werden kann.

Aus den Schriften DE 10 2006 045 592 A1 und DE 84 14 522 sind Verschlusselemente bekannt, die nicht wie oben beschrieben auf das Rohrende aufgesteckt werden, sondern sich innen im Rohr festklemmen. Hierzu weist der Deckel dieser Verschlusselemente verteilt über den Umfang an der zum Rohrinneren zugewandten Seite elastische Klemmelemente auf, die beim Einstecken in das Rohr sich mit der Innenoberfläche des Rohres durch elastische Rückfederung verklemmen.

Bei dieser Art von Verschlusselementen ist die Gefahr, dass sich diese vom Rohrende lösen, geringer als bei den zuvor beschriebenen, da der Bodendeckel bündig an der Stirnfläche des Rohrendes anliegt und das Rohrende nicht umgreift.

Allerdings ragen bei diesen Verschlusselementen Grifflaschen zum Abziehen der Verschlusselement über den Außenumfang des Rohres hinaus, so dass auch hier Angriffspunkte vorhanden sind, die zum unbeabsichtigten Lösen des Verschlusselementes vom Rohr führen können.

Bei beiden Lösungen ist außerdem von Nachteil, dass z. B. bei konstantem Außendurchmesser und stark variierenden Innendurchmessern eine Vielzahl an unterschiedlichen Verschlusselementen benötigt wird, da die elastischen Klemmelemente dieser bekannten Verschlusselemente nur geringe Schwankungen des Innendurchmessers, die im Bereich der Walztoleranzen bis zu wenigen mm liegen, ausgleichen können.

Bei Rohren deren Wanddicken bei konstanten Außendurchmesser von z. B. 600 mm auftragsbezogen um bis zu 10 cm oder mehr variieren können, wie dies z. B. bei mittels dem Pilgerverfahren hergestellten nahtlosen warmgewalzten Rohren möglich ist, können die bekannten Verschlusselemente, die für die Klemmung im Rahmen der Walztoleranzen nur auf einen Nenn-Innendurchmesser ausgelegt sind, nicht mehr verwendet werden.

In solchen Fällen müssen den jeweiligen Wanddicken entsprechend ausgelegte Verschlusselemente verwendet werden. Die Vorhaltung der erforderlichen Vielzahl an Verschlusselement-Varianten ist logistisch sehr aufwändig, kostenintensiv und damit unwirtschaftlich.

Außerdem sind aus der Offenlegungsschrift US 2008/0236691 A1 bereits Stopfen bekannt, mit denen mehrere Bohrungen in einem Betonrohr verschlossen werden können. Die insgesamt vier Bohrungen in der Mantelfläche des Betonrohres dienen zum Anschlagen eines Seils, um das Betonrohr für eine Erdverlegung zu handhaben. Wenn die Bohrungen nicht mehr gebraucht werden, können diese mit den Stopfen verschlossen werden. Jeder der Stopfen besteht aus einer Scheibe, einem Tragteil und elastischen Lamellen. Die ebene Scheibe hat einen Durchmesser, der größer ist als der Durchmesser der Bohrungen, um diese abzudecken. An der der Bohrung zugewandten Unterseite der Scheibe schließt sich zentral das kreuzförmige Tragteil an, dass sich von der Unterseite weg erstreckt und somit im montierten Zustand in die Bohrung ragt. Das Tragteil hat einen Außendurchmesser, der einiges kleiner als der Innendurchmesser der Bohrung ist. Um den Stopfen in der Bohrung befestigen zu können, schließen sich außen an den vier Enden des kreuzförmigen Tragteils jeweils elastische Lamellen an, deren äußere Enden einen Durchmesser aufweisen, der größer als der Innendurchmesser der Bohrung ist. Beim Einstecken des Tragteils mit den Lamellen in die Bohrung, geben die Lamellen elastisch nach und legen sich mit ihren äußeren Enden von innen an die Innenwand der Bohrung an. Über die elastische Rückfederung der Lamellen wird der Stopfen in der Bohrung gehalten. Der Stopfen mit der Scheibe, dem Tragteil und den Lamellen ist als einteiliges Kunststoffspritzgussteil hergestellt.

Der Erfindung liegt daher die Aufgabe zugrunde, ein in ein Ende eines Rohres einsteckbares Verschlusselement der vorgenannten Art zu schaffen, welches einerseits einen guten Halt an der Innenoberfläche des Rohres auch beim Transport gewährleistet und andererseits bei gleichbleibendem Nennaußendurchmesser auch einfach und flexibel an große Wanddickenunterschiede, d. h. Änderungen im Nenn-Innendurchmesser, angepasst werden kann.

Diese Aufgabe wird gelöst mit einem Verschlusselement gemäß den Merkmalen des Patentanspruchs 1. Vorteilhafte Weiterbildungen sind in den Unteransprüchen 2 bis 15 angegeben.

Nach der Lehre der Erfindung wird diese Aufgabe durch ein Verschlusselement mit einem kreisförmigen Bodendeckel, mit dem in einem Montagezustand das Ende des Rohres verschließbar ist, an dem an einer dem Rohr zugewandten Seite mindestens zwei Klemmelemente angeordnet sind, die sich im Montagezustand an einer Innenoberfläche des Rohres abstützen und den Bodendeckel zum Verschließen des Endes des Rohres halten, wobei die Klemmelemente lösbar an dem Bodendeckel befestigt sind und für eine wahlweise Einstellung der radialen Position der Klemmelemente auf dem Bodendeckel in verschiedenen Positionen an dem Bodendeckel befestigbar sind, so dass eine flexible Anpassung an unterschiedliche Nennwanddicken bei gleichbleibendem Außendurchmesser über eine Veränderung der radialen Position der Klemmelemente an dem Bodendeckel möglich ist.

Im Montagezustand liegt der Bodendeckel an der Stirnfläche des Rohres bündig an und verschließt das Ende des Rohres. Die Klemmelemente sind mit elastisch verformbaren Klemmlippen versehen, die sich beim Einschieben in das Rohrende an der Rohrinnenwand abstützen und sich über elastische Rückfederung kraftschlüssig damit verklemmen.

Erfindungsgemäß ist somit ein Verschlusselement vorgesehen, bei dem auf der Innenseite des Bodendeckels radial verstellbare Klemmelemente angebracht sind, die bei gleichbleibendem Außendurchmesser der Rohre entsprechend der aktuell vorliegenden Wanddicke in ihrer radialen Position auf dem Bodendeckel anpassbar beziehungsweise einstellbar sind.

Kleinere Wanddickenänderungen, die im Toleranzbereich des Rohres liegen, werden wie aus dem Stand der Technik bekannt ohne radiale Verstellung vorteilhaft über die elastisch verformbaren Klemmlippen der Klemmelemente selbst ausgeglichen. Hiermit können Schwankungen des Innendurchmessers bis etwa 10 mm ausgeglichen werden.

Wanddickenänderungen beispielsweise im Bereich von bis zu 10 cm oder mehr werden durch radiales Versetzen der Klemmelemente auf dem Bodendeckel ausgeglichen.

Der Bodendeckel selbst weist immer einen Durchmesser auf, der nicht größer ist als der jeweilige Außendurchmesser des Rohres, um einen Überstand des Deckels über den Rohrumfang hinaus und damit Angriffsfläche für ein unbeabsichtigtes Lösen der Verschlusselement vom Rohr während des Transports in jedem Fall zu vermeiden.

Die Anzahl der auf dem Bodendeckel in Umfangsrichtung angeordneten Klemmelemente richtet sich vorteilhaft nach dem Innendurchmesser der Rohre. Während für Rohre mit kleinerem Innendurchmesser von z. B. 100 mm im Regelfall zwei Klemmelemente ausreichend sind, werden bei größeren Rohren mit Innendurchmessern von beispielsweise 400 mm oder größer, fünf oder mehr Klemmelemente benötigt, um die Verschlusselement möglichst gut zentriert in das Ende des Rohres einsetzen zu können.

Bodendeckel und Klemmelemente werden vorteilhaft als Spritzgießteile aus thermoplastischem Kunststoff hergestellt. Da diese Teile unterschiedliche Aufgaben erfüllen, werden sie in einer vorteilhaften Ausgestaltung der Erfindung aus unterschiedlichen Materialien hergestellt.

Da der Bodendeckel raue Transportbedingungen schadlos überstehen soll, ist dieser möglichst steif und schlagzäh auszulegen. Als vorteilhaftes Material hat sich dafür technischer Kunststoff, wie beispielsweise Polyamid mit einer Dichte von mehr als 1g/cm³, herausgestellt, wobei der Bodendeckel bei großen Rohrdurchmessern zusätzlich mit aussteifenden Sicken versehen werden kann.

Die elastisch verformbaren Klemmlippen der Klemmelemente müssen sich durch elastische Rückfederung beim Einschieben des Verschlusselementes mit der Innenoberfläche des Rohres verklemmen, um einen sicheren Halt zu gewährleisten. Als vorteilhaft hat sich Polyethylen als Material für die elastischen Klemmelemente herausgestellt.

Wieder vom Ende des Rohres entfernt werden kann das Verschlusselement beispielsweise mittels einer in den Bodendeckel zum Spritzgießen eingebrachten Materialschwächung oder Öffnung, durch die beispielsweise ein hakenförmiges Werkzeug eingeführt und damit der Deckel aus dem Rohr herausgezogen werden kann. Die Materialschwächung bzw. Öffnung sollte allerdings nicht zu groß sein, um die Schutzwirkung der Kappe nicht zu beeinträchtigen. Als günstig haben sich Öffnungsdurchmesser von weniger als 20 mm herausgestellt.

Falls eine Öffnung im Bodendeckel nicht gewünscht ist, kann das Verschlusselement auch vom Ende des Rohres abgehebelt werden. Hierzu wird ein Hebelwerkzeug zwischen Rohrstirnfläche und Bodendeckel angesetzt und das Verschlusselement abgehebelt. Dies kann beispielsweise mit einem Spachtel, einem Schraubendreher oder mittels ähnlicher Werkzeuge geschehen.

Durch die radiale Verstellmöglichkeit der Klemmelemente auf dem Bodendeckel kann eine große Variantenvielfalt für unterschiedliche Rohrinnendurchmesser bei konstantem Außendurchmesser abgedeckt werden, ohne dass unterschiedlich vorgefertigte, entsprechend angepasste Verschlusselemente vorgehalten werden müssen. Hierdurch werden die Kosten für Beschaffung und Logistik deutlich reduziert. Da im Unterschied zum Stand der Technik nur separat gefertigte Bodendeckel und Klemmelemente transportiert und gelagert werden müssen, wird zudem wesentlich weniger Transport- und Lagerkapazität für die einzelnen Teile benötigt.

In der Praxis werden zur Montage der Verschlusselemente entsprechend der Außendurchmesser der Rohre, Standard-Bodendeckel und die entsprechenden Klemmelemente vorgehalten. Die Klemmelemente selbst sind unabhängig vom Rohrdurchmesser und der Wanddicke als Standard Elemente dimensioniert, so dass nur unterschiedliche Bodendeckel, entsprechend den produzierten Rohraußendurchmessern benötigt werden.

Eine vorteilhafte Ausführungsform der Erfindung sieht vor, dass die Klemmelemente ausgestaltet sind, um eine kontinuierliche oder rasterartige Einstellung der radialen Position der Klemmelemente entsprechend der aktuell vorliegenden Wanddicke der Rohre zu ermöglichen.

Eine kontinuierliche Verstellbarkeit kann beispielsweise mittels einer Verschiebeklemmung nach dem Nut/Federprinzip realisiert werden.

Die Befestigung der Klemmelemente mit einer rasterartigen Steckverbindung an dem Bodendeckel ist besonders empfehlenswert, da der Bodendeckel und die Klemmelemente mittels einer Steckverbindung in einfacher Weise zu verbinden sind. Das Rastermaß ist vorteilhaft so ausgelegt, dass die Standard Wanddicken der Rohre damit abgedeckt werden können.

Zur Realisierung der Steckverbindung ist in einer vorteilhaften Ausführungsform der Bodendeckel mit hervorstehenden bolzenartigen Elementen versehen, die in einem festen Raster radial, optional auf einer Steckleiste, angeordnet sind und auf die die Klemmelemente aufgesteckt werden können.

Hierzu sind die Klemmelemente mit einer mit dem Bodendeckel verbindbaren Auflagerplatte versehen, welche zur Aufnahme der bolzenartigen Elemente beim Aufstecken der Klemmelemente mit entsprechend dem Bolzendurchmesser angepassten Bohrungen in dem entsprechenden Rastermaß versehen ist.

Für die Montage des Verschlusselementes werden die Auflagerplatten der einzelnen Klemmelemente entsprechend der Wanddicke des zu verschließenden Rohres mit den Bohrungen in der jeweiligen radialen Position auf die entsprechenden Bolzen des Bodendeckels so aufgesetzt, dass sich die Bolzen durch die Bohrungen drücken und sich in den Bohrungen festklemmen.

Um ein unbeabsichtigtes Lösen der Klemmelemente vom Bodendeckel zu vermeiden, sind die Durchmesser der Bolzen und der Bohrungen so aufeinander abgestimmt, dass beim Aufstecken eine Klemmung eintritt, durch die ein fester Halt der Klemmelemente auf dem Bodendeckel gewährleistet ist.

Hierbei ist die Anzahl an Bolzen, die sich mit der Auflagerplatte verklemmen so ausgelegt, dass ein Lösen der Auflagerplatte vom Bodendeckel unter üblichen Transportbedingungen ausgeschlossen werden kann. Auflagerplatte und Bodendeckel sollten aber an mindestens zwei besser an vier oder sechs Stellen miteinander verbindbar sein.

In einer weiteren Ausführungsform kann aber auch der Bodendeckel mit Bohrungen versehen sein und die Auflagerplatten der Klemmelemente mit entsprechenden Bolzen, wenn dies fertigungstechnisch vorteilhafter sein sollte.

Die Erfindung lässt zahlreiche Ausführungsformen zu. Zur weiteren Verdeutlichung ihres Grundprinzips ist eine davon als Skizze dargestellt und wird nachfolgend beschrieben.

Es zeigen:
Figur 1 a eine schematische Darstellung der Frontseite des Verschlusselementes,
Figur 1b eine schematische Darstellung der Rückseite des Verschlusselementes,
Figur 2 eine schematische Darstellung des Klemmelementes,
Figur 3 eine schematische Schnittdarstellung eines Endes eines dünneren Rohres mit einem Verschlusselement und
Figur 4 eine schematische Schnittdarstellung eines Endes eines dickeren Rohres mit einem Verschlusselement.

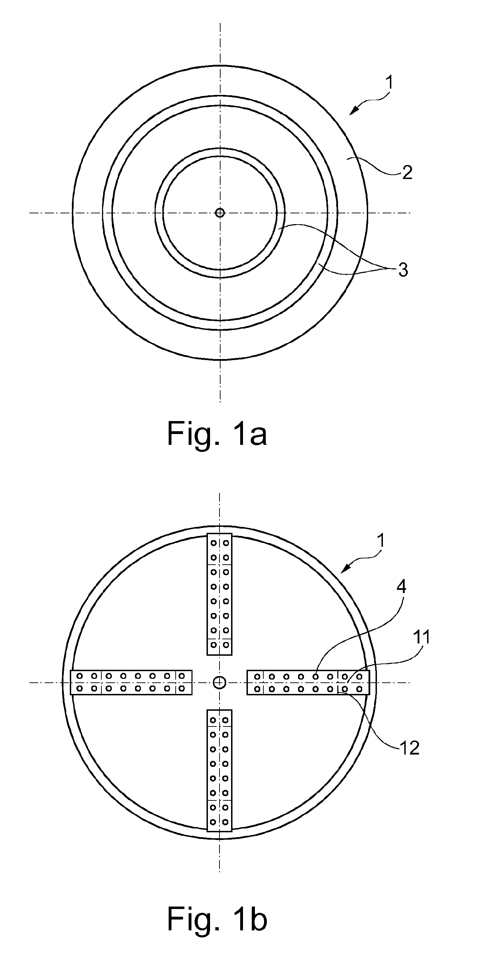

Die Figur 1 a zeigt in einer schematischen Darstellung eine Draufsicht auf eine Ausführungsform der Frontseite und Figur 1b eine Draufsicht auf die Rückseite des erfindungsgemäßen Verschlusselementes 1.

Das erfindungsgemäße Verschlusselement 1 besteht aus einem Bodendeckel 2, in den gemäß Figur 1 a die Biegesteifigkeit erhöhende konzentrisch verlaufende Sicken 3 eingebracht sind.

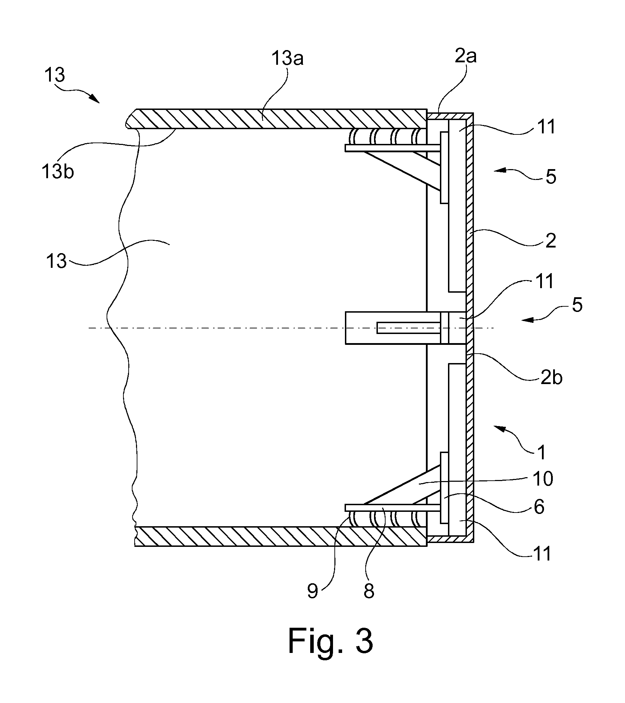

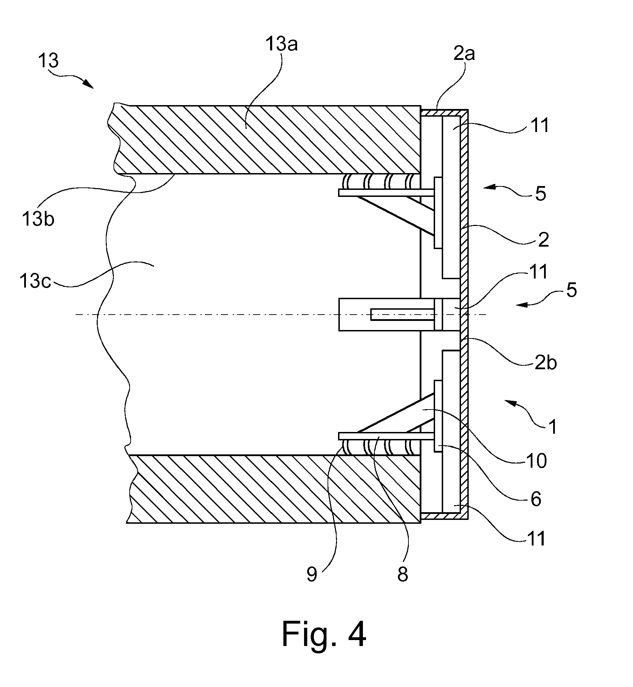

Die Rückseite 2b des Bodendeckels 2, also die nach dem Verschließen des Endes 13a des Rohres 13 dem Rohrinneren 13c (siehe Figuren 3 und 4) zugewandte Seite, ist gemäß Figur 1b mit in diesem Beispiel vier über die Innenfläche des Bodendeckels 2 in gleichmäßigem Winkelabstand auf radial verlaufende, einstückig mit dem Bodendeckel 2 ausgebildete Steckleisten 11 verteilten bolzenartigen Elementen 4 versehen. Diese bolzenartigen Elemente 4 sind paarweise nebeneinander angeordnet und erstrecken sich in radialer Richtung. Die radiale Erstreckung der Steckleiste und der radiale Abstand der bolzenartigen Elemente 4 zueinander sind so ausgelegt, dass eine problemlose Einstellung auf die aktuell vorliegende Nennwanddicke des Rohres 13 erfolgen kann.

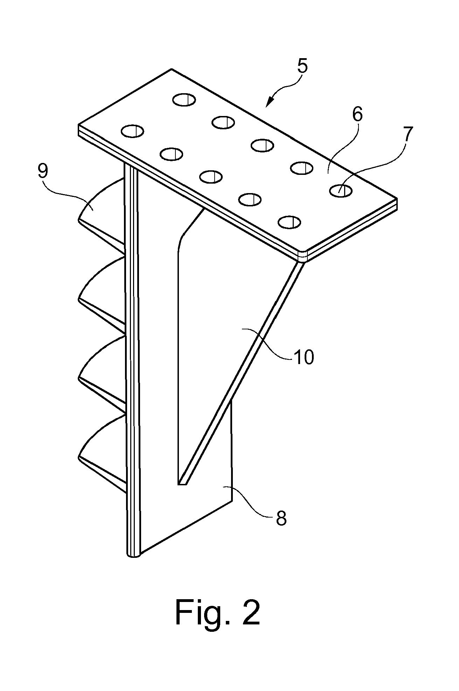

In Figur 2 ist ein erfindungsgemäßes Klemmelement 5 schematisch dargestellt. Das Klemmelement 5 besteht aus einer mit dem Bodendeckel 2 verbindbaren Auflagerplatte 6, in die Bohrungen 7 eingebracht sind, deren Anordnung dem Rastermaß der bolzenartigen Elemente 4 entspricht. Die Anordnung der Bohrungen 7 in der Auflagerplatte 6 korrespondiert mit der Anordnung der bolzenartigen Elemente 4 auf den Steckleisten 11 des Bodendeckels 2. Die Bohrungen 7 sind vom Durchmesser so ausgelegt, dass die Auflagerplatte 6 mit den Bohrungen 7 auf die bolzenartigen Elemente 4 klemmend aufgesteckt werden kann.

An der Auflagerplatte 6 schließt sich eine im rechten Winkel dazu angeordnete Tragleiste 8 an, die einstückig mit der Auflagerplatte 6 ausgebildet ist. Auf der der Rohrinnenseite zugewandten Seite der Tragleiste 8 sind elastisch verformbare seitlich abstehende Klemmlippen 9 angeordnet, die etwa parallel zur Auflagerplatte 6 ausgerichtet sind. Auf der anderen Seite ist eine sich zwischen Auflagerplatte 6 und Tragleiste 8 verlaufende Aussteifung 10 vorgesehen. Die Aussteifung 10 ist wichtig, damit eine ausreichende Klemmkraft von den Klemmlippen 9 auf die Rohrinnenoberfläche 13b aufgebracht werden kann.

Wird das Klemmelement 5 aus Figur 2 auf die bolzenartigen Elemente 4 der Steckleiste 11 des Bodendeckels 2 gemäß Figur 1b aufgesteckt, verklemmt sich in diesem Beispiel die Auflagerplatte 6 mit zehn Bohrungen 7 mit den entsprechenden bolzenartigen Elementen 4 auf dem Bodendeckel 2. Die radiale Position der Auflagerplatte 6 auf der Steckleiste 11 ist mit dem Bezugszeichen 12 gekennzeichnet.

Die Anzahl der sich in radialer Richtung auf der Steckleiste 11 des Bodendeckels 2 erstreckenden bolzenartigen Elemente 4 sollte dabei mindestens so groß sein, wie die entsprechende Anzahl an Bohrungen in der Auflagerplatte 6, damit das Klemmelement 5 einen ausreichend festen Sitz auf dem Bodendeckel 2 bekommt.

Um die erfindungsgemäß notwendige radiale Verstellbarkeit des Klemmelementes 5 auf dem Bodendeckel 2 zu gewährleisten, muss die Erstreckung der Auflagerplatte 6 auf dem Bodendeckel 2 beziehungsweise der Steckleiste 11 kleiner sein, als der Radius des Bodendeckels 2 bzw. der Länge der Steckleiste 11.

Durch unterschiedliches Positionieren der Auflagerplatte 6 auf der Steckleiste 11 des Bodendeckels 2 lassen sich die Klemmelemente 5 den unterschiedlichen Wanddicken von Rohren 13 sehr einfach anpassen. Die Position der auf der Steckleiste 11 aufgesteckten Auflagerplatte 6 wird so festgelegt, dass sich die elastischen Klemmlippen 9 des Verschlusselementes 1 nach dem Einstecken in das Ende 13a des Rohres 13 mit der Rohrinnenoberfläche 13b verklemmen und so einen festen, transportsicheren Sitz gewährleisten.

Die Figur 3 zeigt eine schematische Schnittdarstellung eines Endes 13a eines Rohres 13 mit einer dünneren Wanddicke, das mit einem Verschlusselement 1 verschlossen ist. Das Verschlusselement 1 besteht im Wesentlichen aus dem Bodendeckel 2 und dem Klemmelement 5. Es ist ersichtlich, dass der flache und runde Bodendeckel 2 an seinem Außenumfang einen umlaufenden Rand 2a aufweist, der sich rechtwinklig an den Bodendeckel 2 anschließt und eine Art umlaufenden Mantel bildet. Der umlaufende Rand 2a hat etwa eine Höhe von 2cm und ist in Richtung des zu verschließenden Rohres 13 gerichtet. Der Bodendeckel 2 ist somit insgesamt topfförmig ausgebildet. Auch ist ersichtlich, dass der Außendurchmesser des Bodendeckels 2 kleiner als der Außendurchmesser des Rohres 13 ist und somit gegenüber dem Rohr 13 zurückspringt. Wie zuvor ausgeführt können der Außendurchmesser des Bodendeckels 2 und der Außendurchmesser des Rohres 13 maximal identisch groß sein. Größer darf er nicht sein, da er dann über den Außenumfang des Rohres 13 hinausragt und der Bodendeckel 2 abgeschoben werden könnte. An der Rückseite 2b des Bodendeckels 2 sind die insgesamt vier Steckleisten 11 befestigt. Hierbei ist die Höhe der Steckleisten 11 geringer als die Länge des Randes 2a des Bodendeckels 2 und entspricht in etwa der Hälfte der Länge des Randes 2a des Bodendeckels 2. Die Höhe der Steckleisten 11 ist so gewählt, dass die Auflageplatte 6 des Klemmelementes 5 im Montagezustand des Bodendeckels 2 ausreichend Raum zwischen einer Stirnseite 13d des Rohres 13 und der Steckleiste 11 erhält und nicht verhindert wird, dass der Rand 2a des Bodendeckels 2 beim Verschließen des Ende 13a des Rohres 13 zur Anlage an die Stirnseite 13d des Rohres 13 kommt. Die Steckleisten 11 beginnen hierbei am Rand 2a des Bodendeckels 2 und enden im Bereich der Mitte des Bodendeckels 2. Des Weiteren ist zu erkennen, dass die Klemmlippen 9 sich an der Innenoberfläche 13b des Rohres 13 abstützen und durch den Einsteckvorgang leicht in Richtung der Öffnung der Rohres 13 abgelenkt sind.

Die Figur 4 eine im Wesentlichen der Figur 3 entsprechende schematische Schnittdarstellung eines Endes 13a eines Rohres 13 mit einer dickeren Wanddicke in Vergleich zu dem Rohr 13 in Figur 3, das ebenfalls mit einem Verschlusselement 1 verschlossen ist. Gegenüber der Figur 3 ist zu erkennen, dass die Klemmelemente 5 auf den Steckleisten 11 weiter nach innen versetzt sind, da die Wanddicke des Rohres 13 dicker ist. Das Verschlusselement ist somit einfach an die andere Wanddicke des Rohres 13 angepasst worden. Hierbei sind dann die Bohrungen 7 in der Auflageplatte 6 des Klemmelements 5 mit anderen bolzenartigen Elementen 4 der Steckleiste 11 im Eingriff.

### Bezugszeichenliste

- 1: Verschlusselement
- 2: Bodendeckel
- 2a: Rand
- 2b: Rückseite
- 3: Sicken
- 4: bolzenartige Elemente
- 5: Klemmelement
- 6: Auflagerplatte
- 7: Bohrungen
- 8: Tragleiste
- 9: elastische Klemmlippen
- 10: Aussteifung
- 11: Steckleiste
- 12: radiale Position der Auflagerplatte 6
- 13: Rohr
- 13a: Ende des Rohres
- 13b: Innenoberfläche des Rohres
- 13c: Rohrinneres des Rohres

## Patentansprüche

1. Verschlusselement (1) zum Verschließen eines Endes eines Rohres, insbesondere eines Stahlrohres, mit einem kreisförmigen Bodendeckel (2), mit dem in einem Montagezustand das Ende des Rohres verschließbar ist, an dem an einer dem Rohr zugewandten Seite mindestens zwei Klemmelemente (5) angeordnet sind, die sich im Montagezustand an einer Innenoberfläche des Rohres abstützen und den Bodendeckel (2) zum Verschließen des Endes des Rohres halten,
**dadurch gekennzeichnet,**
**dass** die Klemmelemente (5) lösbar an dem Bodendeckel (2) befestigt sind und für eine wahlweise Einstellung der radialen Position der Klemmelemente (5) auf dem Bodendeckel (2) in verschiedenen Positionen an dem Bodendeckel (2) befestigbar sind.

2. Verschlusselement nach Anspruch 1,
**dadurch gekennzeichnet,**
**dass** die Klemmelemente (5) in kontinuierlichen oder rasterartigen Positionen entsprechend der aktuell vorliegenden Wanddicke des zu verschließendes Endes des Rohres an dem Bodendeckel (2) befestigbar sind.

3. Verschlusselement nach Anspruch 1 und 2,
**dadurch gekennzeichnet,**
**dass** die Klemmelemente (5) über eine rasterartige Steckverbindung an dem Bodendeckel (2) befestigbar sind.

4. Verschlusselement nach Anspruch 3,
**dadurch gekennzeichnet,**
**dass** das Klemmelement (5) eine Auflagerplatte (6) umfasst und die Steckverbindung am Bodendeckel (2) angeordnete bolzenartige Elemente (4) in einem definierten Rastermaß und die mit den bolzenartigen Elementen (4) verbindbare Auflagerplatte (6) umfasst, welche zur klemmenden Aufnahme der bolzenartigen Elemente (4) beim Aufstecken mit entsprechenden dem Bolzendurchmesser und dem Rastermaß der bolzenartigen Elemente (4) angepassten Bohrungen (7) versehen ist.

5. Verschlusselement nach Anspruch 4,
**dadurch gekennzeichnet,**
**dass** die bolzenartigen Elemente (4) auf Steckleisten (11) am Bodendeckel (2) angeordnet sind.

6. Verschlusselement nach den Ansprüchen 4 und 5,
**dadurch gekennzeichnet,**
**dass** die Auflagerplatte (6) an mindestens zwei radialen Positionen mit dem Bodendeckel (2) verbindbar ist.

7. Verschlusselement nach mindestens einem der Ansprüche 1 bis 6,
**dadurch gekennzeichnet,**
**dass** der Bodendeckel (2) mit die Steifigkeit erhöhenden Sicken (3) versehen ist.

8. Verschlusselement nach Anspruch 7,
**dadurch gekennzeichnet,**
**dass** die Sicken (3) konzentrisch verlaufen.

9. Verschlusselement nach mindestens einem der Ansprüche 1 bis 8,
**dadurch gekennzeichnet,**
**dass** der Bodendeckel (2) aus formstabilem technischem Kunststoff und die Klemmelemente (5) aus elastischem Polyäthylen bestehen.

10. Verschlusselement nach Anspruch 9,
**dadurch gekennzeichnet,**
**dass** der technische Kunststoff eine Dichte von mehr als 1g/cm³ aufweist

11. Verschlusselement nach mindestens einem der Ansprüche 1 bis 10,
**dadurch gekennzeichnet,**
**dass** das Klemmelement (5) mehrere in das Innere des Rohres hineinragende und sich im Montagezustand mit der Innenwand der Rohres verklemmende elastisch federnde Klemmlippen (9) umfasst.

12. Verschlusselement nach mindestens einem der Ansprüche 2 bis 10,
**dadurch gekennzeichnet,**
**dass** die rastermäßige Befestigung der Klemmelemente (5) an dem Bodendeckel (2) den jeweiligen Standard-Nennwanddicken der zu verschließenden Rohre angepasst ist.

13. Verschlusselement nach mindestens einem der Ansprüche 1 bis 12,
**dadurch gekennzeichnet,**
**dass** abhängig vom Innendurchmesser des Rohres der Bodendeckel (2) zur konzentrischen Klemmung an der Innenoberfläche des Rohres eine Vielzahl von Klemmelementen (5) konzentrisch auf dem Bodendeckel (2) angeordnet sind.

14. Verschlusselement nach mindestens einem der Ansprüche 1 bis 13,
**dadurch gekennzeichnet,**
**dass** zum Entfernen des Verschlusselements (1) vom Ende des Rohres der Bodendeckel (2) eine Materialschwächung oder eine Öffnung aufweist, in die ein Werkzeug einführbar und mit dem Bodendeckel (2) verhakbar ist.

15. Verschlusselement nach mindestens einem der Ansprüche 1 bis 14,
**dadurch gekennzeichnet,**
**dass** der Außendurchmesser des Bodendeckels (2) höchstens dem Außendurchmesser des Rohres entspricht.

## Claims

1. Closing-off member (1) for closing off an end of a pipe, and in particular a steel pipe, having a circular end-cover (2) by which, in a fitted state, the end of the pipe can be closed off and on which are arranged, on a side adjacent the pipe, at least two clamping members (5) which, in the fitted state, are supported against an interior surface of the pipe and retain the end-cover (2) for closing-off the end of the pipe, **characterised in that** the clamping members (5) are detachably fastened to the end-cover (2) and can be fastened to the end-cover (2) in different positions to allow the radial positions of the clamping members (5) on the end-cover (2) to be set in a selectable way.

2. Closing-off member according to claim 1, **characterised in that** the clamping members (5) can be fastened to the end-cover (2) in continuously variable or grid-type positions, to suit the wall thickness which exists at the time of the end of the pipe which is to be closed off.

3. Closing-off member according to claims 1 and 2, **characterised in that** the clamping members (5) can be fastened to the end-cover (2) by means of grid-type plug-in connections.

4. Closing-off member according to claim 3, **characterised in that** the clamping member (5) comprises a support plate (6) and the plug-in connections comprise spigot-type members (4) in a grid of defined pitch which are arranged on the end-cover (2), and the support plate (6), which latter can be connected to the spigot-type members (4) and, to receive and clamp the spigot-type members (4) when inserted onto them, is provided with holes (7) adapted to the diameter of the spigot-type members (4) and the pitch of their grid.

5. Closing-off member according to claim 4, **characterised in that** the spigot-type members (4) are arranged on male strips (11) on the end-cover (2).

6. Closing-off member according to claims 4 and 5, **characterised in that** the support plate (6) can be connected to the end-cover (2) in at least two radial positions.

7. Closing-off member according to at least one of claims 1 to 6, **characterised in that** the end-cover (2) is provided with corrugations (3) which increase its stiffness.

8. Closing-off member according to claim 7, **characterised in that** the corrugations (3) extend concentrically.

9. Closing-off member according to at least one of claims 1 to 8, **characterised in that** the end-cover (2) is composed of rigid engineering plastics material and the clamping members (5) of elastic polyethylene.

10. Closing-off member according to claim 9, **characterised in that** the engineering plastics materials has a density of more than 1 g/cm³.

11. Closing-off member according to at least one of claims 1 to 10, **characterised in that** the clamping member (5) comprises a plurality of elastically resilient clamping lips (9) which project into the interior of the pipe and which, in the fitted state, clamp to the inner wall of the pipe.

12. Closing-off member according to at least one of claims 2 to 10, **characterised in that** the fastening of the clamping members (5) to the end-cover (2) in conformity with a grid is adapted to the particular standard nominal wall-thicknesses of the pipes to be closed off.

13. Closing-off member according to at least one of claims 1 to 12, **characterised in that**, as dictated by the inside diameter of the pipe, the end-cover (2), a plurality of clamping members (5) are arranged on the end-cover (2) about a common centre to be clamped concentrically to the interior surface of the pipe.

14. Closing-off member according to at least one of claims 1 to 13, **characterised in that**, to remove the closing-off member (1) from the end of the pipe, the end-cover (2) has a weakening of its material or an opening into which a tool can be inserted and hooked onto the end-cover (2).

15. Closing-off member according to at least one of claims 1 to 14, **characterised in that** the outside diameter of the end-cover (2) is equal to not more than the outside diameter of the pipe.

## Revendications

1. Elément de fermeture (1) destiné à fermer une extrémité d'un tube, en particulier un tube en acier, comportant un couvercle inférieur circulaire (2) qui permet de fermer, une fois le montage terminé, l'extrémité du tube et dont le côté tourné vers le tube comporte au moins deux éléments de serrage (5) qui s'appuient, une fois le montage terminé, sur une surface intérieure du tube et qui maintiennent le couvercle inférieur (2) de façon à fermer l'extrémité du tube,
**caractérisé en ce que** les éléments de serrage (5) sont fixés de manière amovible au couvercle inférieur (2) et peuvent être fixés au couvercle inférieur (2) dans différentes positions afin de régler sélectivement la position radiale des éléments de serrage (5) sur le couvercle inférieur (2).

2. Elément de fermeture selon la revendication 1, **caractérisé en ce que** les éléments de serrage (5) peuvent être fixés au couvercle inférieur (2) dans des positions continues ou de type tramé correspondant à l'épaisseur de paroi actuelle de l'extrémité du tube qui doit être fermée.

3. Elément de fermeture selon les revendications 1 et 2, **caractérisé en ce que** les éléments de serrage (5) peuvent être fixés au couvercle inférieur (2) par une connexion enfichable de type tramé.

4. Elément de fermeture selon la revendication 3, **caractérisé en ce que** l'élément de serrage (5) comprend une plaque d'appui (6) et la connexion enfichable comporte des éléments (4) de type boulon, disposés sur le couvercle inférieur (2), selon une trame définie, et la plaque d'appui (6) qui peut être reliée aux éléments (4) de type boulon et qui est pourvue de perçages (7) correspondant au diamètre des boulons et adaptés à la trame des éléments de type boulon afin de recevoir avec serrage, lors de l'insertion, les éléments (4) de type boulon.

5. Elément de fermeture selon la revendication 4, **caractérisé en ce que** les éléments (4) en forme de boulon sont disposés sur des baguettes enfichables (11) au niveau du couvercle inférieur (2).

6. Elément de fermeture selon les revendications 4 et 5, **caractérisé en ce que** la plaque d'appui (6) peut être reliée en au moins deux positions radiales au couvercle inférieur (2).

7. Elément de fermeture selon l'une au moins des revendications 1 à 6, **caractérisé en ce que** le couvercle inférieur (2) est pourvu de moulures (3) renforçant la rigidité.

8. Elément de fermeture selon la revendication 7, **caractérisé en ce que** les moulures (3) sont concentriques.

9. Elément de fermeture selon l'une au moins des revendications 1 à 8, **caractérisé en ce que** le couvercle inférieur (2) est en matière plastique technique de forme stable et les éléments de serrage (5) sont en polyéthylène élastique.

10. Elément de fermeture selon la revendication 9, **caractérisé en ce que** la matière plastique technique a une densité supérieure à 1 g/cm³.

11. Elément de fermeture selon l'une au moins des revendications 1 à 10, **caractérisé en ce que** l'élément de serrage (5) comprend une pluralité de lèvres de serrage élastiques (9) qui font saillie à l'intérieur du tube et qui se bloquent, une fois le montage terminé, avec la paroi intérieure du tube.

12. Elément de fermeture selon l'une au moins des revendications 2 à 10, **caractérisé en ce que** la fixation de type trame des éléments de serrage (5) au couvercle inférieur (2) est adaptée aux épaisseurs de paroi nominales standards respectives des tubes qui doivent être fermés.

13. Elément de fermeture selon l'une au moins des revendications 1 à 12, **caractérisé en ce que** une pluralité d'éléments de serrage (5) sont disposés concentriquement sur le couvercle inférieur (2), en fonction du diamètre intérieur du tube, afin de serrer le couvercle inférieur (2) concentriquement sur la surface intérieure du tube.

14. Elément de fermeture selon l'une au moins des revendications 1 à 13, **caractérisé en ce que**, pour retirer l'élément de fermeture (1) de l'extrémité du tube, le couvercle inférieur (2) comporte une zone de matière de moindre résistance mécanique ou comporte une ouverture dans laquelle un outil peut être inséré et accroché au couvercle inférieur (2).

15. Elément de fermeture selon l'une au moins des revendications 1 à 14, **caractérisé en ce que** le diamètre extérieur du couvercle inférieur (2) correspond au maximum au diamètre extérieur du tube.
